# EUROPEAN PATENT APPLICATION

(11) **EP 4 836 012 A2**
(43) Date of publication of application: **04.11.2026**
(21) Application number: 26206171.6
(22) Date of filing: 18.09.2026
(51) Int. Cl.: H01M 4/525, H01M 4/36, H01M 4/131, H01M 4/505, H01M 10/0567, H01M 4/02

(54) **POSITIVE ELECTRODE MATERIAL, ELECTROCHEMICAL APPARATUS AND ELECTRONIC APPARATUS**

(30) Priority: 18.09.2025 CN 202511339751
(71) Applicant: Ningde Amperex Technology Limited, Ningde, Fujian 352100 (CN)
(72) Inventor: NI, Lianshan, Ningde, 352100 (CN); LI, Gaofeng, Ningde, 352100 (CN); ZHOU, Juan, Ningde, 352100 (CN); ZHANG, Hui, Ningde, 352100 (CN)
(74) Representative: Dehns Germany Partnerschaft mbB

(57) **Abstract**

This application discloses a positive electrode material, an electrochemical apparatus and an electronic apparatus. The positive electrode material includes a lithium nickel manganese composite oxide. The positive electrode material includes a first region within 50 nm from a surface of the positive electrode material and a second region at a distance of more than 1000 nm from the surface of the positive electrode material. The positive electrode material includes Na and P. Based on a total molar amount of Ni and Mn in the first region, a molar percentage of Na in the first region is c_{1Na}, and a molar percentage of P in the first region is c_{1P}. Based on a total molar amount of Ni and Mn in the second region, a molar percentage of Na in the second region is c_{2Na}, where c_{1Na}<c_{2Na}, and 0.005≤c_{1P}/c_{1Na}≤10. The electrochemical apparatus in this application has good cycling performance and storage performance at high temperature, and also has high energy density.

## Description

### TECHNICAL FIELD

This application relates to the field of electrochemical apparatuses, and in particular, to a positive electrode material, an electrochemical apparatus and an electronic apparatus.

### BACKGROUND

With increasingly high market demands for long battery life of electronic devices, energy density of electrochemical apparatuses (for example, lithium-ion batteries) urgently needs to be improved. Increasing working voltages is an effective way to improve the energy density of the electrochemical apparatuses. However, after the working voltages are increased, problems such as oxygen release from positive electrode materials, electrolyte decomposition, gas generation of batteries and abrupt capacity drop after cycling may occur. Therefore, there is an urgent need to develop electrochemical apparatuses with high energy density, better cycling performance and high safety.

### SUMMARY

In view of this, this application provides a positive electrode material, an electrochemical apparatus and an electronic apparatus to resolve at least one of the foregoing technical problems.

A first aspect of this application provides a positive electrode material, where the positive electrode material includes a lithium nickel manganese composite oxide, the positive electrode material includes a first region within 50 nm from a surface of the positive electrode material and a second region at a distance of more than 1000 nm from the surface of the positive electrode material, and the positive electrode material includes Na and P; based on a total molar amount of Ni and Mn in the first region, a molar percentage of Na in the first region is c_{1Na}, and a molar percentage of P in the first region is c_{1P}; and based on a total molar amount of Ni and Mn in the second region, a molar percentage of Na in the second region is c_{2Na}, where c_{1Na}<c_{2Na}, and 0.005≤c_{1P}/c_{1Na}≤10.

In this application, a positive electrode material of a sodium-ion battery is soaked in the ammonium dihydrogen phosphate solution and then the resulting mixture is sintered at high temperature, which promotes P to adsorb and remove Na from the surface of the positive electrode material of the sodium-ion battery, so that Na contents present a gradient increase from the surface to the bulk phase of the positive electrode material of the sodium-ion battery. In addition, a cation-disordered layer rich in oxygen defects is induced onto the surface layer of the positive electrode material of the sodium-ion battery, and a Na₃PO₄ coating layer is formed on the surface of the positive electrode material of the sodium-ion battery. Then, ion exchange between lithium ions and sodium ions is performed to convert the positive electrode material of the sodium-ion battery into a positive electrode material of a lithium-ion battery, and transform the Na₃PO₄ coating layer into a Li₃PO₄ coating layer, thereby obtaining a lithium nickel manganese composite oxide with the Li₃PO₄ surface coating, the surface layer rich in oxygen defects and an increased sodium gradient.

In addition, gradient-distributed Na is introduced into the lithium nickel manganese composite oxide to build the "pillar" in the lithium layer and induce oxygen defects, so that the lithium nickel manganese composite oxide has a significantly increased reversible charge-discharge capacity in a high-voltage range (for example, 4.2 V to 4.5 V), thereby ensuring that the lithium nickel manganese composite oxide has higher structural stability and kinetic performance under the high voltage while greatly improving the charge-discharge capacity of the positive electrode material. In addition, the presence of the oxygen defects on the surface improves the surface stability of the lithium nickel manganese composite oxide, inhibits oxygen release and structural phase transition on the surface of the positive electrode material, thereby improving the cycling performance and gas generation of the electrochemical apparatus under a condition of high temperature and a high voltage.

According to the first aspect, in some possible embodiments, 0.18≤c_{1Na}/c_{2Na}≤0.99, and further, 0.3≤c_{1Na}/c_{2Na}≤0.9.

The Na contents in the positive electrode material in this application gradually increase from the first region to the second region of the surface layer, which can not only induce formation of the oxygen defects, but also exert the "pillar" effect in the lithium layer, thereby inhibiting the structural phase transition of the surface layer of the positive electrode material. In addition, when the Na content in the surface layer of the positive electrode material is relatively low, a greater amount of Li can be accommodated in a Li layer, which increases a gram capacity of the positive electrode material, thereby improving the energy density of the electrochemical apparatus. In addition, when the Na content in the second region of the positive electrode material is relatively high, lattice stability of the second region inside the positive electrode material after delithiation can be further improved, thereby further improving the cycling performance and gas generation of the electrochemical apparatus under a condition of high temperature and a high voltage.

According to the first aspect, in some possible embodiments, 0.05≤c_{1P}/c_{1Na}≤5.

In this application, the P content and the Na content in the first region are further adjusted. When a ratio of the P content to the Na content falls within the foregoing range, the cycling performance and gas generation of the electrochemical apparatus under a condition of high temperature and a high voltage are further improved.

According to the first aspect, in some possible embodiments, c_{1Na} is 1% to 10%.

In this application, when the molar percentage of Na in the first region of the positive electrode material is adjusted to fall within the foregoing range, the lattice stability of the first region of the surface layer of the positive electrode material after delithiation can be further improved, thereby further improving the cycling performance and gas generation of the electrochemical apparatus under a condition of high temperature and a high voltage.

According to the first aspect, in some possible embodiments, c_{2Na} is 5.6% to 10%.

In this application, when the molar percentage of Na in the second region of the positive electrode material is adjusted to fall within the foregoing range, the lattice stability of the second region of the surface layer of the positive electrode material after delithiation can be further improved, thereby further improving the cycling performance and gas generation of the electrochemical apparatus under a condition of high temperature and a high voltage.

A second aspect of this application provides an electrochemical apparatus, including a positive electrode plate and an electrolyte. The positive electrode plate includes the positive electrode material provided in the first aspect of this application. The electrochemical apparatus in this application has good cycling performance and gas generation under high temperature and a high voltage.

According to the second aspect, in some possible embodiments, the electrolyte includes a boron-containing compound, and the boron-containing compound includes at least one of lithium bis(oxalato)borate, lithium difluoro(oxalato)borate, lithium tetrafluoroborate, tris(hexafluoroisopropyl) borate, trimethyl borate, tris(trimethylsilyl) borate, boric acid, tris(2,2,2-trifluoroethyl) borate, 3-thienylboronic acid or pyridine-boron trifluoride. Based on the total mass of the electrolyte, a mass percentage of the boron-containing compound is A%, and 0.05≤A≤5.

The boron-containing compound in the electrolyte in this application is decomposed after charge and discharge, and interacts with Na in the surface layer of the positive electrode material, which further induces removal of Na from the surface of the positive electrode material, and constructs more Na vacancies in the surface layer of the positive electrode material, thereby facilitating storage of more lithium ions and improving the gram capacity of the positive electrode material. In addition, B and P can further combine with oxygen on the surface of the lithium nickel manganese composite oxide, to work together with the oxygen defects on the surface to further inhibit the oxygen release on the surface of the positive electrode material, which reduces direct contact between the electrolyte and the surface of the positive electrode material, thereby inhibiting the decomposition of the electrolyte and the occurrence of the side reaction, greatly improving the surface stability of the positive electrode material, and further significantly improving the cycling performance and gas generation of the electrochemical apparatus under a condition of high temperature and a high voltage.

In addition, B interacts with Na in the surface layer of the positive electrode material, so that the SEI film (solid electrolyte interface film) on the surface of the positive electrode material includes inorganic components of Na, Li and B, which promotes continuous growth of the SEI film, optimizes a film-forming process of the SEI film on the surface, and densifies and stabilizes the formed SEI film, thereby improving viscoelasticity and flexibility of the SEI film and reducing surface cracks. In addition, the SEI film containing Na can improve a Li⁺ migration rate, and can also reduce decomposition and gas generation of the electrolyte during cycling and high-temperature storage, thereby improving cycling and storage performance of the electrochemical apparatus at high temperature.

According to the second aspect, in some possible embodiments, 0.5≤A≤2.

In this application, the mass percentage of the boron-containing compound in the electrolyte is adjusted to fall within the foregoing range, the cycling performance and gas generation of the electrochemical apparatus under the condition of the high temperature and the high voltage are further improved.

According to the second aspect, in some possible embodiments, when the electrochemical apparatus is charged and discharged at a current of 0.1 C in a voltage range of 2.8 V to 4.5 V, an obtained differential capacity-voltage (dQ/dV) curve exhibits a first oxidation peak and a first reduction peak in a range of 4.2 V to 4.5 V.

According to the second aspect, in some possible embodiments, based on a mass of the positive electrode material, the peak intensity of the first oxidation peak is 2090 mAh/g/V to 3090 mAh/g/V, and the peak intensity of the first reduction peak is 2830 mAh/g/V to 3710 mAh/g/V. In this way, the positive electrode material can have a higher reversible charge-discharge capacity in a high-voltage range, thereby greatly improving the energy density of the electrochemical apparatus.

According to the second aspect, in some possible embodiments, a peak voltage of the first oxidation peak is Vo1, and a peak voltage of the first reduction peak is Vr1, where |Vo1-Vr1|≤0.058 V. In this way, reversibility of the positive electrode material in the high-voltage range is better, thereby improving the cycling performance of the electrochemical apparatus under the condition of the high voltage.

According to the second aspect, in some possible embodiments, when the electrochemical apparatus is charged and discharged at a current of 0.1 C in a voltage range of 2.8 V to 4.5 V, a charging curve in the obtained capacity-voltage curve exhibits a plateau in a range of 4.2 V to 4.5 V, a capacity of the charging curve in the range of 4.2 V to 4.5 V is Q1, and a capacity of the charging curve in the range of 3.0 V to 4.5 V is Qt, where 0.28≤Q1/Qt≤0.31. In this way, the positive electrode material can have a higher reversible charge-discharge capacity in the high-voltage range, thereby greatly improving the energy density of the electrochemical apparatus.

According to the second aspect, in some possible embodiments, a differential capacity-voltage (dQ/dV) curve exhibits a second oxidation peak and a second reduction peak in a range of 3.6 V to 4.0 V.

According to the second aspect, in some possible embodiments, an X-ray diffraction pattern of the positive electrode material exhibits characteristic diffraction peaks at 2θ ranges of 17° to 20°, 35° to 38° and 42° to 46°.

According to the second aspect, in some possible embodiments, unit cell parameter a of the positive electrode material satisfies a condition: 2.875 Å≤a≤3.105 Å.

According to the second aspect, in some possible embodiments, unit cell parameter c of the positive electrode material satisfies a condition: 14.345 Å≤c≤15.105 Å.

According to the second aspect, in some possible embodiments, the positive electrode material has a layered crystal structure belonging to an R-3m space group.

According to the second aspect, in some possible embodiments, based on the total molar amount of Ni and Mn in the positive electrode material, the molar percentage of Ni in the positive electrode material is 50% to 90%.

According to the second aspect, in some possible embodiments, based on the total molar amount of Ni and Mn in the positive electrode material, the molar percentage of Mn in the positive electrode material is 10% to 50%.

According to the second aspect, in some possible embodiments, based on the total molar amount of Ni and Mn in the positive electrode material, the molar percentage of Li in the positive electrode material is 87% to 102%.

According to the second aspect, in some possible embodiments, based on the total molar amount of Ni and Mn in the positive electrode material, the molar percentage of P in the positive electrode material is 0.05% to 10%.

According to the second aspect, in some possible embodiments, based on the total molar amount of Ni and Mn in the positive electrode material, the molar percentage of Na in the positive electrode material is 4.5% to 9.6%.

A third aspect of this application provides an electronic apparatus, including the electrochemical apparatus provided in the second aspect of this application. The electrochemical apparatus has good cycling performance and gas generation under high temperature and a high voltage, which facilitates prolonging of service life of the electronic apparatus.

### BRIEF DESCRIPTION OF DRAWINGS

FIG. 1 is an X-ray diffraction pattern of positive electrode materials in Example 1 and Comparative Example 1.
FIG. 2 is a scanning electron microscope (SEM) image of a positive electrode material in Example 1 at a magnification of 5000 times.
FIG. 3 is a TOF-SIMS image of Na in a positive electrode material in Example 1.
FIG. 4 is a TOF-SIMS image of P in a positive electrode material in Example 1.
FIG. 5 shows charge-discharge curves of coin-type lithium-ion batteries in Example 1 and Comparative Example 1.
FIG. 6 shows differential capacity-voltage curves of coin-type lithium-ion batteries in Example 1 and Comparative Example 1.

### DESCRIPTION OF EMBODIMENTS

The embodiments of this application are described in detail below. The embodiments described below with reference to the accompanying drawings are exemplary and are only used to explain this application, and cannot be understood as a limitation on this application. Reagents and materials in the following embodiments are all commercially available.

### Positive electrode material

An embodiment of this application provides a positive electrode material. The positive electrode material includes a lithium nickel manganese composite oxide, the positive electrode material includes a first region within 50 nm from a surface of the positive electrode material and a second region at a distance of more than 1000 nm from the surface of the positive electrode material, and the positive electrode material includes Na and P; based on a total molar amount of Ni and Mn in the first region, a molar percentage of Na in the first region is c_{1Na}, and a molar percentage of P in the first region is c_{1P}; and based on a total molar amount of Ni and Mn in the second region, a molar percentage of Na in the second region is c_{2Na}, where c_{1Na}<c_{2Na}, and 0.005≤c_{1P}/c_{1Na}≤10, and further 0.05≤c_{1P}/c_{1Na}≤5. For example, a value obtained by dividing c_{1P} by c_{1Na} (c_{1P}/c_{1Na}) may be 0.005, 0.01, 0.05, 0.1, 0.5, 1, 1.5, 2, 2.5, 3, 3.5, 4, 4.5, 5, 5.5, 6, 6.5, 7, 7.5, 8, 8.5, 9, 9.5, or 10 or any value within a range composed of any preceding values. When the value obtained by dividing c_{1P} by c_{1Na} (c_{1P}/c_{1Na}) is excessively high, for example, exceeding an upper limit in this application, a P content on a surface of the positive electrode material is excessively high relative to a Na content on the surface of the positive electrode material. The excessive P content adsorbs and removes Na from a surface layer of the positive electrode material, and as a result, the Na content in the first region and the second region of the positive electrode material is excessively low, and a "pillar" effect cannot be effectively exerted, which deteriorates structural stability and kinetic performance of the positive electrode material and further deteriorates cycling performance and gas generation performance of the electrochemical apparatus under high temperature and a high voltage. When the value obtained by dividing c_{1P} by c_{1Na} (c_{1P}/c_{1Na}) is excessively low, for example falling below a lower limit of this application, the P content on the surface of the positive electrode material is excessively low relative to the Na content on the surface of the positive electrode material. In addition, gradient distribution of Na and oxygen defects cannot be effectively constructed, which reduces structural stability of a surface layer and further deteriorates the cycling performance and gas generation performance of the electrochemical apparatus under high temperature and a high voltage. Without being bound by any theory, the inventors of this application have found that when the value obtained by dividing c_{1P} by c_{1Na} (c_{1P}/c_{1Na}) falls within the foregoing range, an appropriate amount of P on the surface of the positive electrode material can enable the lithium nickel manganese composite oxide to simultaneously possess a Li₃PO₄ coating on its surface and abundant oxygen defects in its surface layer, thereby significantly improving the cycling performance and gas generation performance of the electrochemical apparatus under high temperature and a high voltage.

In addition, gradient-distributed Na is introduced into the lithium nickel manganese composite oxide to build the "pillar" in the lithium layer and induce oxygen defects, so that the lithium nickel manganese composite oxide has a significantly increased reversible charge-discharge capacity in a high-voltage range (for example, 4.2 V to 4.5 V), thereby ensuring that the lithium nickel manganese composite oxide has higher structural stability and kinetic performance under the high voltage while greatly improving the charge-discharge capacity of the positive electrode material. In addition, the presence of the oxygen defects on the surface improves the surface stability of the lithium nickel manganese composite oxide, inhibits oxygen release and structural phase transition on the surface of the positive electrode material, thereby improving the cycling performance and gas generation of the electrochemical apparatus under a condition of high temperature and a high voltage.

In some embodiments of this application, 0.1≤c_{1Na}/c_{2Na}≤0.99, further 0.18≤c_{1Na}/c_{2Na}≤0.99, and still further 0.3≤c_{1Na}/c_{2Na}≤0.9. For example, a value obtained by dividing c_{1Na} by c_{2Na} (c_{1Na}/c_{2Na}) may be 0.1, 0.12, 0.14, 0.16, 0.18, 0.2, 0.22, 0.24, 0.26, 0.28, 0.3, 0.35, 0.37, 0.4, 0.45, 0.48, 0.5, 0.53, 0.55, 0.57, 0.6, 0.63, 0.65, 0.7, 0.75, 0.8, 0.85, 0.9, 0.95, or 0.99 or any value within a range composed of any preceding values. When the value obtained by dividing c_{1Na} by c_{2Na} (c_{1Na}/c_{2Na}) is excessively high, for example exceeding the upper limit in this application, the Na content in the surface layer of the positive electrode material is excessively high, or the distribution of Na is excessively uniform, which achieves a relatively limited improvement effect on the charge-discharge capacity of the positive electrode material. When the value obtained by dividing c_{1Na} by c_{2Na} (c_{1Na}/c_{2Na}) is excessively low, for example falling below the lower limit in this application, distribution of Na in the first region and the second region in the surface layer of the positive electrode material is very uneven, which causes lattice distortion and reduces the structural stability of the surface layer, thereby further deteriorating the cycling performance and gas generation of the electrochemical apparatus under the high temperature and high voltage. Without being bound by any theory, the inventors of this application have found that when the value obtained by dividing c_{1Na} by c_{2Na} (c_{1Na}/c_{2Na}) falls within the foregoing range, the Na contents in the positive electrode material gradually increase from the first region to the second region of the surface layer, which can not only induce formation of the oxygen defects, but also exert the "pillar" effect in the lithium layer, thereby inhibiting the structural phase transition of the surface layer of the positive electrode material. In addition, when the Na content in the surface layer of the positive electrode material is relatively low, a greater amount of Li can be accommodated in a Li layer, which increases a gram capacity of the positive electrode material, thereby improving the energy density of the electrochemical apparatus. In addition, when the Na content in the second region of the positive electrode material is relatively high, lattice stability of the second region inside the positive electrode material after delithiation can be further improved, thereby further improving the cycling performance and gas generation of the electrochemical apparatus under a condition of high temperature and a high voltage.

In some embodiments of this application, c_{1Na} is 0.3% to 10%, and further c_{1Na} is 1% to 10%. For example, the molar percentage of Na in the first region of the positive electrode material may be 0.3%, 0.5%, 1%, 1.3%, 1.5%, 2%, 2.3%, 2.5%, 3%, 3.3%, 3.5%, 4%, 4.3%, 4.5%, 5%, 5.3%, 5.5%, 6%, 6.3%, 6.5%, 7%, 7.3%, 7.5%, 8%, 8.3%, 8.5%, 9%, 9.3%, 9.5%, or 10% or any value within a range composed of any preceding values. When the molar percentage of Na in the first region of the positive electrode material is excessively high, for example exceeding the upper limit in this application, there are fewer sites available for Li⁺ storage in the surface layer of the positive electrode, and a limited effect of improving the charge-discharge capacity of the positive electrode material is exerted. When the molar percentage of Na in the first region of the positive electrode material is excessively low, for example falling below the lower limit in this application, the distribution of Na in the surface layer of the positive electrode material is very nonuniform, which causes lattice distortion and deteriorates cycling performance and gas generation of the electrochemical apparatus under high temperature and a high voltage. Without being bound by any theory, the inventors of this application have found that when the molar percentage of Na in the first region of the positive electrode material falls within the foregoing range, there are more sites available for Li⁺ storage in the surface layer of the positive electrode material, the gram capacity of the positive electrode material is higher, and an appropriate amount of Na is also retained in the surface layer of the positive electrode material, which can further improve lattice stability of the surface layer of the positive electrode material after delithiation, thereby further improving the cycling performance and gas generation of the electrochemical apparatus under a condition of high temperature and a high voltage.

In some embodiments of this application, c_{2Na} is 1% to 12%, and further c_{2Na} is 5.6% to 10%. For example, the molar percentage of Na in the second region of the positive electrode material may be 1%, 1.2%, 1.4%, 1.6%, 1.8%, 2%, 2.2%, 2.4%, 2.6%, 2.8%, 3%, 3.2%, 3.4%, 3.6%, 3.8%, 4%, 4.2%, 4.4%, 4.6%, 4.8%, 5%, 5.5%, 5.6%, 6%, 6.5%, 7%, 7.5%, 8%, 8.5%, 9%, 9.5%, 10%, 10.5%, 11%, 11.5%, or 12% or any value within a range composed of any preceding values. When the molar percentage of Na in the second region of the positive electrode material is excessively high, for example exceeding the upper limit in this application, there is excessive Na in a bulk phase of the positive electrode material and fewer sites are available for Li⁺ storage, which reduces the energy density of the positive electrode material. When the molar percentage of Na in the second region of the positive electrode material is excessively low, for example falling below the lower limit in this application, there is a small amount of Na in the bulk phase of the positive electrode material, and as a result, the "pillar" effect cannot be effectively exerted, and a bulk structure of the positive electrode material is unstable, thereby deteriorating the cycling performance and gas generation of the electrochemical apparatus under high temperature and a high voltage. Without being bound by any theory, the inventors of this application have found that when the molar percentage of Na in the second region of the positive electrode material falls within the foregoing range, the lattice stability of the bulk phase of the positive electrode material after delithiation can be further improved, thereby further improving the cycling performance and gas generation of the electrochemical apparatus under a condition of high temperature and a high voltage.

In some embodiments of this application, based on the total molar amount of Ni and Mn in the positive electrode material, the molar percentage of Ni in the positive electrode material is 50% to 90%. For example, the molar percentage of Ni in the positive electrode material may be 50%, 52%, 54%, 55%, 57%, 59%, 60%, 62%, 64%, 65%, 67%, 68%, 70%, 72%, 74%, 76%, 78%, 80%, 82%, 84%, 86%, 88%, or 90% or any value within a range composed of any preceding values. In this application, the molar percentage of Ni in the positive electrode material is controlled to fall within the foregoing range, which helps improve the energy density of the electrochemical apparatus.

In some embodiments of this application, based on the total molar amount of Ni and Mn in the positive electrode material, the molar percentage of Mn in the positive electrode material is 10% to 50%. For example, the molar percentage of Mn in the positive electrode material may be 10%, 12%, 15%, 17%, 20%, 22%, 25%, 27%, 29%, 30%, 32%, 34%, 35%, 37%, 40%, 42%, 45%, 47%, or 50% or any value within a range composed of any preceding values.

In some embodiments of this application, based on the total molar amount of Ni and Mn in the positive electrode material, the molar percentage of P in the positive electrode material is 0.05% to 10%. For example, the molar percentage of P in the positive electrode material may be 0.05%, 0.1%, 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, or 10% or any value within a range composed of any preceding values. When the molar percentage of P in the positive electrode material is excessively high, for example exceeding the upper limit in this application, the P content in the positive electrode material is excessively high, and as a result, a percentage of the active material in the positive electrode material is reduced and the energy density is reduced. When the molar percentage of P in the positive electrode material is excessively low, for example falling below the lower limit in this application, none of the Li₃PO₄ coating, gradient distribution of Na and oxygen defects can be effectively constructed on the surface of the positive electrode material, and as a result, structural stability of the surface and surface layer is reduced, thereby deteriorating the cycling performance and gas generation performance of the electrochemical apparatus under high temperature and a high voltage. Without being bound by any theory, the inventors of this application have found that when the molar percentage of P in the positive electrode material falls within the foregoing range, the Li₃PO₄ surface coating, oxygen defect richness on the surface layer and Na gradient can all be increased, which achieves a synergistic modification effect, thereby significantly improving the cycling performance and gas generation performance of the electrochemical apparatus under high temperature and a high voltage.

In some embodiments of this application, based on the total molar amount of Ni and Mn in the positive electrode material, the molar percentage of Li in the positive electrode material is 87% to 102%. For example, the molar percentage of Li in the positive electrode material may be 87%, 88%, 89%, 90%, 91%, 92%, 93%, 94%, 95%, 96%, 97%, 98%, 99%, 100%, 101%, or 102% or any value within a range composed of any preceding values.

In some embodiments of this application, based on the total molar amount of Ni and Mn in the positive electrode material, the molar percentage of Na in the positive electrode material is 1% to 12%. Further, the molar percentage of Na in the positive electrode material is 4.5% to 9.6%. For example, the molar percentage of Na in the positive electrode material may be 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 9.6%, 10%, 10.5%, 11%, 11.5%, or 12% or any value within a range composed of any preceding values. When the molar percentage of Na in the positive electrode material is excessively high, for example exceeding the upper limit in this application, fewer sites are available for Li⁺ storage, which reduces the energy density of the positive electrode material. When the molar percentage of Na in the positive electrode material is excessively low, for example falling below the lower limit in this application, there is a small amount of Na in the positive electrode material, and as a result, the "pillar" effect cannot be exerted, and the structure of the positive electrode material is unstable, thereby deteriorating the cycling performance and gas generation of the electrochemical apparatus under high temperature and a high voltage. Without being bound by any theory, the inventors of this application have found that when the molar percentage of Na in the positive electrode material falls within the foregoing range, the lattice stability in the bulk phase of the positive electrode material after delithiation can be further improved, thereby further improving the cycling performance and gas generation of the electrochemical apparatus under a condition of high temperature and a high voltage.

In some embodiments of this application, an X-ray diffraction pattern of the positive electrode material exhibits characteristic diffraction peaks at 2θ ranges of 17° to 20°, 35° to 38° and 42° to 46°.

In some embodiments of this application, unit cell parameter a of the positive electrode material satisfies a condition: 2.875 Å≤a≤3.105 Å.

In some embodiments of this application, unit cell parameter c of the positive electrode material satisfies a condition: 14.345 Å≤c≤15.105 Å.

In some embodiments of this application, the positive electrode material has a layered crystal structure belonging to an R-3m space group.

A method for preparing the foregoing positive electrode material includes the following steps.

Step S1: Dissolve a nickel source and a manganese source in water to obtain a first aqueous solution, and under a nitrogen atmosphere, mix the first aqueous solution with a precipitant and a complexing agent for reaction, followed by filtration, water washing and drying to obtain a nickel-manganese based precursor.

In some embodiments, the nickel source includes at least one of nickel sulfate, nickel acetate, nickel nitrate or nickel chloride. The manganese source includes at least one of manganese sulfate, manganese acetate, manganese nitrate and manganese chloride. The precipitant includes at least one of sodium hydroxide, lithium hydroxide, sodium carbonate or lithium carbonate. The complexing agent is ammonia water.

Step S2: Under a first atmosphere, calcine the nickel-manganese based precursor at first temperature for a first period of time, and then cool a resulting mixture to room temperature to obtain a first product. In this step, the nickel-manganese based precursor is pre-calcined into a spinel oxide, namely, the first product.

In some embodiments, the first temperature is 350°C to 950°C, and the first period of time is 1 to 24 hours.

In some embodiments, the first atmosphere is selected from at least one of an air atmosphere, an oxygen atmosphere or a mixed atmosphere of air and oxygen.

Step S3: Under a second atmosphere, calcine the first product and a sodium source at second temperature for a second period of time, and then cool a resulting mixture to room temperature to obtain a second product.

In some embodiments, the second temperature is 500°C to 900°C, and the second period of time is 6 to 36 hours.

In some embodiments, the second atmosphere is selected from at least one of an air atmosphere, an oxygen atmosphere or a mixed atmosphere of air and oxygen.

In some embodiments, the sodium source includes at least one of sodium hydroxide, sodium oxide, sodium carbonate or sodium bicarbonate.

Step S4: Add the second product into an ammonium dihydrogen phosphate solution, stir a resulting mixture at third temperature, and evaporate the solvent to dryness to obtain a third product (positive electrode material of a sodium-ion battery).

In some embodiments, the third temperature is 30°C to 200°C.

Step S5: Under a fourth atmosphere, calcine the third product and a lithium source at fourth temperature for a fourth period of time, and then cool a resulting mixture to room temperature, followed by water washing, filtration, drying, and sieving, to obtain a positive electrode material (positive electrode material of a lithium-ion battery) in this application.

In some embodiments, the fourth temperature is 250°C to 550°C, and the fourth period of time is 0.5 to 24 hours.

In some embodiments, the fourth atmosphere is selected from at least one of an air atmosphere, an oxygen atmosphere or a mixed atmosphere of air and oxygen.

In some embodiments, the lithium source includes at least one of lithium hydroxide, lithium oxide, lithium nitrate, lithium fluoride, lithium chloride, lithium acetate or lithium carbonate.

In this application, the positive electrode material of the sodium-ion battery is soaked in the ammonium dihydrogen phosphate solution and then the resulting mixture is sintered at high temperature, which promotes P to adsorb and remove Na from the surface of the positive electrode material of the sodium-ion battery, so that Na contents present a gradient increase from the surface to the bulk phase of the positive electrode material of the sodium-ion battery. In addition, a cation-disordered layer rich in oxygen defects is induced onto the surface layer of the positive electrode material of the sodium-ion battery, and a Na₃PO₄ coating layer is formed on the surface of the positive electrode material of the sodium-ion battery. Then, ion exchange between lithium ions and sodium ions is performed to convert the positive electrode material of the sodium-ion battery into a positive electrode material of a lithium-ion battery, and transform the Na₃PO₄ coating layer into a Li₃PO₄ coating layer, thereby obtaining a lithium nickel manganese composite oxide with the Li₃PO₄ surface coating, the surface layer rich in oxygen defects and an increased sodium gradient.

### Positive electrode plate

The positive electrode plate includes a positive electrode current collector and a positive electrode material layer disposed on at least one surface of the positive electrode current collector. The "positive electrode material layer disposed on at least one surface of the positive electrode current collector" means that the positive electrode material layer may be disposed on one or two surfaces of the positive electrode current collector along its thickness direction. It should be noted that the "surface" herein may be an entire or partial area of the surface of the positive electrode current collector. This is not particularly limited in this application, as long as the objective of this application can be achieved. The positive electrode current collector is not particularly limited in this application, as long as the objective of this application can be achieved. For example, the positive electrode current collector may include aluminum foil, aluminum alloy foil or a composite current collector (for example, an aluminum-carbon composite current collector). The positive electrode material layer may also include the positive electrode material, a conductive agent and a binder in this application.

The binder is not particularly limited in this application, as long as the objective of this application can be achieved. For example, the binder may include, but is not limited to, a binder polymer, such as at least one of polyvinylidene fluoride, polytetrafluoroethylene, polyolefins, sodium carboxymethyl cellulose, lithium carboxymethyl cellulose, modified polyvinylidene fluoride, modified SBR rubber or polyurethane. The polyolefin binder includes at least one of polyethylene, polypropylene, polyolefin ester, polyolefin alcohol or polyacrylic acid.

The conductive agent is not particularly limited in this application, as long as the objective of this application can be achieved. For example, the conductive agent may include, but is not limited to, a carbon-based material, a metal-based material, a conductive polymer or a mixture thereof. The carbon-based material includes natural graphite, artificial graphite, carbon black, acetylene black, Ketjen black or carbon fiber. The metal-based material includes metal powder or metal fibers of copper, nickel, aluminum, silver, or the like. The conductive polymer includes a polyphenylene derivative.

Thicknesses of the positive electrode current collector and the positive electrode material layer are not particularly limited in this application, as long as the objective of this application can be achieved. For example, the thickness of the positive electrode current collector is 5 µm to 20 µm, and a thickness of a single-sided positive electrode material layer is 30 µm to 120 µm.

Optionally, the positive electrode plate may further include a conductive layer, and the conductive layer is located between the positive electrode current collector and the positive electrode material layer. Composition of the conductive layer is not particularly limited and may be a conductive layer commonly used in the art. The conductive layer includes a conductive agent and a binder. The conductive agent and the binder in the conductive layer are not particularly limited in this application, and each may be, for example, at least one of the foregoing conductive agents and binders.

### Negative electrode plate

The negative electrode plate includes a negative electrode current collector and a negative electrode material layer disposed on the negative electrode current collector. The negative electrode current collector may be at least one of copper foil, nickel foil, stainless steel foil, titanium foil, the carbon-based current collector, or the like, or may be any composite current collector disclosed in the prior art, for example, including, but not limited to, a current collector formed by combining the foregoing conductive foil and a polymer substrate. The negative electrode material layer includes a negative electrode material, and optionally a conductive agent, a binder and a thickener.

A specific type of negative electrode material is not specifically limited and can be selected based on a need. As an example, the negative electrode material includes, but is not limited to, at least one of natural graphite, artificial graphite, mesocarbon microbeads (MCMB), hard carbon, soft carbon, silicon, a silicon-carbon composite, SiO, Li-Sn alloy, Li-Sn-O alloy, Sn, SnO, SnO₂, spinel-structured Li₄Ti₅O₁₂, or Li-Al alloy.

The specific type of conductive agent is not specifically limited and can be selected based on a need. As an example, the conductive agent includes, but is not limited to, at least one of conductive graphite, super conductive carbon, acetylene black, carbon black, Ketjen black, carbon dots, carbon nanotubes, graphene or carbon nanofibers.

The specific type of binder is not specifically limited and can be selected based on a need. As an example, the binder includes, but is not limited to, at least one of styrene-butadiene rubber (SBR), polyvinylidene fluoride (PVDF), polytetrafluoroethylene (PTFE), polyvinyl butyral (PVB), water-based acrylic resin or carboxymethyl cellulose.

The specific type of thickener is not specifically limited and can be selected based on a need. As an example, the thickener includes, but is not limited to, sodium carboxymethyl cellulose (CMC-Na).

### Electrolyte

Based on some embodiments of this application, the electrolyte includes an organic solvent, a lithium salt and an optional additive. The organic solvent in the electrolyte in this application may be any organic solvent known in the prior art that can be used as a solvent in the electrolyte. An electrolyte salt used in the electrolyte according to this application is not limited, and may be any electrolyte salt known in the prior art. The additive in the electrolyte according to this application may be any additive known in the prior art that can be used as an additive in the electrolyte. In some embodiments, the organic solvent includes, but is not limited to, ethylene carbonate (EC), propylene carbonate (PC), diethyl carbonate (DEC), ethyl methyl carbonate (EMC), dimethyl carbonate (DMC) or ethyl propionate. In some embodiments, the organic solvent includes an ether solvent, including, for example, at least one of 1,3-dioxolane (DOL) or dimethoxyethane (DME). In some embodiments, the lithium salt includes at least one of an organic lithium salt or an inorganic lithium salt. In some embodiments, the lithium salt includes, but is not limited to: lithium hexafluorophosphate (LiPF₆), lithium tetrafluoroborate (LiBF₄), lithium difluorophosphate (LiPO₂F₂), lithium bis(trifluoromethanesulfonyl)imide LiN(CF₃SO₂)₂ (LiTFSI), lithium bis(fluorosulfonyl)imide Li(N(SO₂F)₂) (LiFSI), lithium bis(oxalato)borate LiB(C₂O₄)₂ (LiBOB) or lithium difluoro(oxalato)borate LiBF₂(C₂O₄) (LiDFOB).

In some embodiments of this application, the electrolyte includes a boron-containing compound, and the boron-containing compound includes at least one of lithium bis(oxalato)borate, lithium difluoro(oxalato)borate, lithium tetrafluoroborate, tris(hexafluoroisopropyl) borate, trimethyl borate, tris(trimethylsilyl) borate, boric acid, tris(2,2,2-trifluoroethyl) borate, 3-thienylboronic acid or pyridine-boron trifluoride. Based on the total mass of the electrolyte, a mass percentage of the boron-containing compound is A%, where 0.05≤A≤5, and further 0.5≤A≤2. For example, the mass percentage of the boron-containing compound in the electrolyte may be 0.05%, 0.1%, 0.3%, 0.5%, 0.7%, 1%, 1.3%, 1.5%, 1.7%, 2%, 2.3%, 2.5%, 2.7%, 3%, 3.3%, 3.5%, 3.7%, 4%, 4.3%, 4.5%, 4.7%, or 5% or any value within a range composed of any preceding values. When the mass percentage of the boron-containing compound in the electrolyte is excessively high, for example exceeding the upper limit in this application, not only ionic conductivity of the electrolyte deteriorates, but also a large amount of Na is adsorbed and removed from the surface layer of the positive electrode material, and as a result, in the positive electrode material, a value obtained by dividing c_{1Na} by c_{2Na} (c_{1Na}/c_{2Na}) is excessively low, and lattice distortion is caused, thereby reducing structural stability of the surface layer of the positive electrode and further deteriorating the cycling performance and gas generation of the electrochemical apparatus under high temperature and a high voltage. When the mass percentage of the boron-containing compound in the electrolyte is excessively low, for example falling below the lower limit in this application, the gram capacity of the positive electrode material cannot be improved by reducing the value obtained by dividing c_{1Na} by c_{2Na} (c_{1Na}/c_{2Na}), and the cycling performance and gas generation of the electrochemical apparatus under a condition of high temperature and a high voltage cannot be further improved by effectively constructing an SEI film rich in B-containing component. Without being bound by any theory, the inventors of this application have found that when the mass percentage of the boron-containing compound in the electrolyte falls within the foregoing range, the boron-containing compound in the electrolyte in this application is decomposed after charge and discharge, and interacts with Na in the surface layer of the positive electrode material, which further induces removal of Na from the surface of the positive electrode material, and constructs more Na vacancies in the surface layer of the positive electrode material, thereby facilitating storage of more lithium ions and improving the gram capacity of the positive electrode material. In addition, B and P can further combine with oxygen on the surface of the lithium nickel manganese composite oxide, to work together with the oxygen defects on the surface to further inhibit the oxygen release on the surface of the positive electrode material, which reduces direct contact between the electrolyte and the surface of the positive electrode material, thereby inhibiting the decomposition of the electrolyte and the occurrence of the side reaction, greatly improving the surface stability of the positive electrode material, and further significantly improving the cycling performance and gas generation of the electrochemical apparatus under a condition of high temperature and a high voltage.

In addition, B interacts with Na in the surface layer of the positive electrode material, so that the SEI film (solid electrolyte interface film) on the surface of the positive electrode material includes inorganic components of Na, Li and B, which promotes continuous growth of the SEI film, optimizes a film-forming process of the SEI film on the surface, and densifies and stabilizes the formed SEI film, thereby improving viscoelasticity and flexibility of the SEI film and reducing surface cracks. In addition, the SEI film containing Na can improve a Li⁺ migration rate, and can also reduce decomposition and gas generation of the electrolyte during cycling and high-temperature storage, thereby improving cycling and storage performance of the electrochemical apparatus at high temperature.

### Separator

A material and shape of the separator used in the electrochemical apparatus in this application are not particularly limited, and may belong to any technology disclosed in the prior art. In some embodiments, the separator includes a polymer, an inorganic substance, or the like formed by a material stable in the electrolyte in this application.

For example, the separator may include a substrate layer and a surface treatment layer. The substrate layer is a non-woven fabric, a film or a composite film with a porous structure, and a material of the substrate layer is selected from at least one of polyethylene, polypropylene, polyethylene terephthalate or polyimide, and specifically, may be selected from a polypropylene porous film, a polyethylene porous film, a polypropylene non-woven fabric, a polyethylene non-woven fabric or a polypropylene-polyethylene-polypropylene porous composite film.

A surface treatment layer is provided on at least one surface of the substrate layer, and the surface treatment layer may be a polymer layer or an inorganic layer, or a layer formed by mixing a polymer and an inorganic substance. The inorganic layer includes inorganic particles and a binder. The inorganic particles are selected from at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide or barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylate salt, polyvinylpyrrolidone, polyethylene oxide, polymethyl methacrylate, polytetrafluoroethylene or polyhexafluoropropylene. The polymer layer includes a polymer, and a material of the polymer is selected from at least one of polyamide, polyacrylonitrile, acrylate polymer, polyacrylic acid, polyacrylate salt, polyvinylpyrrolidone, polyethylene oxide, polyvinylidene fluoride, or poly(vinylidene fluoride-hexafluoropropylene).

### Electrochemical apparatus

An embodiment of this application provides an electrochemical apparatus, including a housing (for example, a packaging bag) for accommodating the foregoing positive electrode plate, separator, negative electrode plate and electrolyte, and another component known in the electrochemical field. The preceding another component is not limited in this application. The housing is not particularly limited in this application, and may be a housing known in the art, as long as the objective of this application can be achieved. For example, an aluminum-plastic film packaging bag may be used. The type of electrochemical apparatus is not particularly limited in this application, and may include any apparatus in which an electrochemical reaction occurs. The electrochemical apparatus in this application has good cycling performance and gas generation performance under high temperature and a high voltage.

In some embodiments of this application, when the electrochemical apparatus is charged and discharged at a current of 0.1 C in a voltage range of 2.8 V to 4.5 V, an obtained differential capacity-voltage (dQ/dV) curve exhibits a first oxidation peak and a first reduction peak in a range of 4.2 V to 4.5 V.

In some embodiments of this application, based on the mass of the positive electrode material, peak intensity of the first oxidation peak is greater than or equal to 900 mAh/g/V, and peak intensity of the first reduction peak is greater than or equal to 900 mAh/g/V. In some embodiments of this application, the peak intensity of the first oxidation peak is 2090 mAh/g/V to 3090 mAh/g/V, and the peak intensity of the first reduction peak is 2830 mAh/g/V to 3710 mAh/g/V. In this way, the positive electrode material can have a higher reversible charge-discharge capacity in a high-voltage range, thereby greatly improving the energy density of the electrochemical apparatus.

In some embodiments of this application, a peak voltage of the first oxidation peak is Vo1, and a peak voltage of the first reduction peak is Vr1, where |Vo1-Vr1|≤0.13 V. In some embodiments of this application, |Vo1-Vr1|≤0.058 V. In some embodiments of this application, |Vo1-Vr1|≥0.037 V. In this way, reversibility of the positive electrode material in the high-voltage range is better, thereby improving the cycling performance of the electrochemical apparatus under the condition of the high voltage.

In some embodiments of this application, when the electrochemical apparatus is charged and discharged at a current of 0.1 C in a voltage range of 2.8 V to 4.5 V, a charging curve in the obtained capacity-voltage curve exhibits a plateau in a range of 4.2 V to 4.5 V, a capacity of the charging curve in the range of 4.2 V to 4.5 V is Q1, and a capacity of the charging curve in the range of 3.0 V to 4.5 V is Qt, where 0.17≤Q1/Qt≤0.33. In some embodiments of this application, 0.28≤Q1/Qt≤0.31. For example, a value obtained by dividing Q1 by Qt (Q1/Qt) may be 0.17, 0.18, 0.19, 0.2, 0.21, 0.22, 0.23, 0.24, 0.25, 0.26, 0.27, 0.28, 0.29, 0.3, 0.31, 0.32, or 0.33 or any value within a range composed of any preceding values. In this way, the positive electrode material can have a higher reversible charge-discharge capacity in the high-voltage range, thereby greatly improving the energy density of the electrochemical apparatus.

In some embodiments of this application, a differential capacity-voltage (dQ/dV) curve exhibits a second oxidation peak and a second reduction peak in a range of 3.6 V to 4.0 V.

### Electronic apparatus

The foregoing electrochemical apparatus is applied to the electronic apparatus to supply power to a load in the electronic apparatus. In addition, the foregoing electrochemical apparatus has good cycling performance and gas generation under high temperature and a high voltage, which helps prolong the service life of the electronic apparatus. The electronic apparatus may include, but is not limited to, notebook computers, pen-input computers, mobile computers, e-book players, portable phones, portable facsimile machines, portable copiers, portable printers, head-mounted stereo headphones, video recorders, liquid crystal televisions, portable cleaners, portable CD players, mini compact discs, transceivers, electronic organizers, calculators, memory cards, portable audio recorders, radios, backup power supplies, electric motors, automobiles, motorcycles, electric assist bicycles, bicycles, lighting fixtures, toys, game consoles, clocks, power tools, flashlights, cameras, large-capacity household storage batteries, and lithium-ion capacitors.

### Example 1

### <Preparation of positive electrode material>

Step S1: Prepare a first aqueous solution containing NiSO₄ and MnSO₄ based on a molar ratio of Ni to Mn (50:50); under a nitrogen atmosphere, mix the first aqueous solution with a precipitant, namely NaOH solution, and a complexing agent, namely ammonia water, for reaction, and adjust an ammonia water concentration in the reaction system to 1 mol/L and pH of the reaction system to 12.5, where the total reaction time is 48 hours; and after the reaction, filter a resulting solution, and then perform water washing and drying to obtain a nickel-manganese based precursor.

Step S2: Under a pure oxygen atmosphere, heat the nickel-manganese based precursor to 450°C at a rate of 3°C/min, perform primary calcination for 12 hours, and then cool a resulting mixture to room temperature at a rate of 3°C/min to obtain a first product, namely, a spinel oxide.

Step S3: Based on a ratio of a total molar amount of Ni and Mn to a molar amount of Na and Li, where TM (Ni+Mn)∶Na=1∶1.08, grind and mix spinel oxide and sodium hydroxide uniformly, then heat the mixture to 835°C at a rate of 3°C/min under an air atmosphere, perform secondary calcination for 15 hours, and then cool the mixture to room temperature at a rate of 3°C/min to obtain a second product.

Step S4: Configure an ammonium dihydrogen phosphate solution based on a ratio of the total molar amount of Ni and Mn to a molar amount of P, where TM (Ni+Mn)∶P=1∶0.03, add the second product and the ammonium dihydrogen phosphate solution into a rotary evaporator, and stir the mixture under 80°C at a speed of 300 rpm/min until the solvent is completely volatilized to obtain a third product.

Step S5: Based on a ratio of the total molar amount of Ni and Mn to a molar amount of Li, where TM (Ni+Mn)∶Li=1∶1.5, fully mix the third product and a lithium source (the lithium source is a mixture of lithium hydroxide and lithium nitrate at a molar ratio of 1∶2), heat a resulting mixture to 315°C at a rate of 3°C/min under an air atmosphere, perform fourth calcination for 5 hours, and then cool the mixture to room temperature at a rate of 3°C/min to obtain the positive electrode material.

### <Preparation of positive electrode plate>

A binder, namely polyvinylidene fluoride (PVDF), a conductive agent, namely conductive carbon black (Super P), and the positive electrode material were mixed at a mass ratio of 2:2:96 uniformly, and N-methyl-2-pyrrolidone (NMP) was added as a solvent to obtain a positive electrode slurry with a solid content of 75wt%; the positive electrode slurry was uniformly applied onto a surface of a 10 µm thick positive electrode current collector, namely aluminum foil, followed by drying at 120°C for 1 hour to obtain a positive electrode plate with a 40 µm thick positive electrode material layer applied on one side; the foregoing steps were repeated on another surface of the aluminum foil to obtain a positive electrode plate with positive electrode material layers applied on both sides; and the positive electrode plate was dried under vacuum at 120°C for 1 hour, followed by cold pressing, cutting, and tab welding to obtain a positive electrode plate with dimensions of 74 mm×867 mm, where surface density of one side of the positive electrode material layer was 14 mg/cm².

### <Preparation of negative electrode plate>

A negative electrode material, namely graphite, a thickener, namely sodium carboxymethyl cellulose (CMC-Na), and a binder, namely styrene-butadiene rubber (SBR) were mixed at a mass ratio of 96:2:2, deionized water was added, and a resulting mixture was stirred and mixed uniformly to obtain a negative electrode slurry, where a solid content of the negative electrode slurry was 75wt%; the negative electrode slurry was uniformly applied onto one surface of a 12 µm thick negative electrode current collector, namely copper foil, the negative electrode current collector was dried at 120°C to obtain a negative electrode plate with a 80 µm thick negative electrode material layer applied on one side; the foregoing steps were repeated on another surface of the copper foil to obtain a negative electrode plate with negative electrode material layers applied on both sides; and the negative electrode plate was dried under vacuum at 120°C for 1 hour, followed by cold pressing, cutting, and slitting to obtain a negative electrode plate with dimensions of 78 mm×875 mm.

### <Preparation of electrolyte>

In an argon-filled glove box with water content less than 10 ppm, non-aqueous organic solvents, namely ethylene carbonate (EC), propylene carbonate (PC), and diethyl carbonate (DEC), were mixed at a mass ratio of 1:1:1, then a lithium salt LiPF₆ was added, and the resulting solution was mixed uniformly to obtain an electrolyte. Finally, fluoroethylene carbonate (FEC), 1,3-propane sultone (PS), adiponitrile (ADN) and 1,3,6-hexanetricarbonitrile (HTCN) were added to the electrolyte and the mixture was mixed uniformly. Based on the total mass of the electrolyte, a mass percentage of LiPF₆ was 12.5%, a mass percentage of FEC was 5%, a mass percentage of PS was 2%, a mass percentage of ADN was 1%, a mass percentage of HTCN was 2%, and the non-aqueous organic solvent accounted for the remainder.

### <Preparation of separator>

A 7 µm thick porous polyethylene polymer film with a porosity of 40% was used as the separator.

### <Preparation of lithium-ion pouch battery>

The positive electrode plate, separator, and negative electrode plate prepared above were stacked, so that the separator was sandwiched between the positive electrode plate and the negative electrode plate for isolation, and the positive electrode plate, separator, and negative electrode plate were wound to obtain an electrode assembly. After tabs were welded, the electrode assembly was placed in an aluminum-plastic film packaging bag, and after drying, the electrolyte was injected, followed by processes such as vacuum sealing, standing, formation (upper limit voltage for formation: 4.35 V; formation temperature: 85°C; formation standing time: 2 hours), degassing, and edge trimming, to obtain the lithium-ion pouch battery.

### <Preparation of coin-type lithium-ion battery>

The positive electrode plate was cut into a circular disc with a diameter (Φ) of 14 mm to serve as a working electrode, a metallic lithium disc with a diameter (Φ) of 18 mm was used as a reference electrode, the positive electrode plate and the metallic lithium disc were separated by a separator with a diameter (Φ) of 18 mm, and an appropriate amount of electrolyte was added dropwise, followed by assembling to obtain the coin-type lithium-ion battery.

### Examples 2 to 7

Conditions and preparation methods in Examples 2 to 7 and Example 1 were the same except that the molar ratio of (Ni+Mn)∶P in step S4 of the preparation of the positive electrode material was adjusted, and an ammonium dihydrogen phosphate solution at a different concentration was prepared. The foregoing specific preparation parameters can be adjusted accordingly based on Tables 1 to 3.

### Examples 8 to 15

Conditions and preparation methods in Examples 8 to 15 and Example 1 were the same except that a different amount of trimethyl borate was added during the preparation of the electrolyte. The foregoing specific preparation parameters can be adjusted accordingly based on Tables 1 to 3.

### Example 16

Conditions and preparation methods in Example 16 and Example 12 were the same except that trimethyl borate and lithium bis(oxalato)borate were added during the preparation of the electrolyte, and based on a total mass of the electrolyte, a mass percentage of trimethyl borate was 0.5%, and a mass percentage of lithium bis(oxalato)borate was 0.5%. The foregoing specific preparation parameters can be adjusted accordingly based on Tables 1 to 3.

### Example 17

Conditions and preparation methods in Example 17 and Example 12 were the same except that boric acid and lithium difluoro(oxalato)borate were added during the preparation of the electrolyte, and based on the total mass of the electrolyte, a mass percentage of boric acid was 0.5%, and a mass percentage of lithium difluoro(oxalato)borate was 0.5%. The foregoing specific preparation parameters can be adjusted accordingly based on Tables 1 to 3.

### Example 18

Conditions and preparation methods in Example 18 and Example 12 were the same except that trimethyl borate, tris(trimethylsilyl) borate and boric acid were added during the preparation of the electrolyte, and based on the total mass of the electrolyte, a mass percentage of trimethyl borate was 0.33%, a mass percentage of tris(trimethylsilyl) borate was 0.33%, and a mass percentage of boric acid was 0.33%. The foregoing specific preparation parameters can be adjusted accordingly based on Tables 1 to 3.

### Comparative Example 1

Conditions and preparation methods in Comparative Example 1 and Example 1 were the same except that in step S2 to step S6 during the preparation of the positive electrode material, based on the ratio of the total molar amount of Ni and Mn to the molar amount of Li (TM (Ni+Mn)∶Li=1∶1.05), the nickel-manganese based precursor and lithium carbonate were ground and mixed uniformly, then heated to 800°C at a rate of 5°C/min under an air atmosphere, calcined for 12 hours, then cooled to room temperature at a rate of 5°C/min, and finally washed with deionized water, dried and sieved to obtain a conventional positive electrode material. The foregoing specific preparation parameters can be adjusted accordingly based on Tables 1 to 3.

### Comparative Example 2

Conditions and preparation methods in Comparative Example 2 and Example 1 were the same except that step S4 of the preparation of the positive electrode material was removed. The foregoing specific preparation parameters can be adjusted accordingly based on Tables 1 to 3.

### Comparative Example 3

Conditions and preparation methods in Comparative Example 3 and Example 1 were the same except that the ratio ((Ni+Mn):P=1:0.12) in step S4 of the preparation of the positive electrode material was adjusted to prepare an ammonium dihydrogen phosphate solution. The foregoing specific preparation parameters can be adjusted accordingly based on Tables 1 to 3.

### Test method for lithium-ion pouch battery

### (1) Test of thickness expansion rate after storage at 85°C

The lithium-ion pouch battery was charged at a constant current of 1.5 C to 4.35 V under 25°C, and then charged at a constant voltage of 4.35 V until the current reached 0.05 C, so that the lithium-ion pouch battery reached a fully charged state. The fully charged lithium-ion pouch battery was put in a thermostatic chamber at 85°C for storage for 24 hours, a thickness change of the lithium-ion pouch battery was measured with a micrometer, an initial thickness of the lithium-ion pouch battery before storage was defined as H0, and a thickness after storage was defined as H1. Thickness expansion rate=(H1-H0)/H0×100%.

### (2) Capacity retention rate test under cycling at 45°C

The lithium-ion pouch battery was put in a thermostatic chamber at 45°C, charged at a constant current of 1.5 C to 4.35 V, then charged at a constant voltage of 4.35 V until the current reached 0.05 C, then discharged at a constant current of 4 C to 3.0 V. This was one charge-discharge cycle. The lithium-ion pouch battery was charged and discharged for 500 cycles in the foregoing method, and discharge capacities of the lithium-ion pouch battery in the first cycle and the 500^{th} cycle were recorded. Cycle capacity retention rate=discharge capacity in 500^{th} cycle/discharge capacity in the first cycle×100%.

### Test of coin-type lithium-ion battery

The coin-type lithium-ion battery was charged at a constant current of 0.1 C in a voltage range of 2.8 V to 4.5 V to reach 4.5 V at 25°C, then charged at a constant voltage of 4.5 V until the current reached 50 µA, and a charging capacity of the coin-type lithium-ion battery was recorded. The coin-type lithium-ion battery was then discharged at a constant current of 0.1 C until a lower voltage limit reached 2.8 V, and a relationship curve of the capacity and the voltage and the differential capacity-voltage (dQ/dV) curve were plotted. Peak intensity and a peak voltage Vo1 of the first oxidation peak, and peak intensity and a peak voltage Vr1 of the first reduction peak were obtained based on the differential capacity-voltage (dQ/dV) curve. A capacity Q1 in the voltage range of 4.2 V to 4.5 V and a capacity Qt in the voltage range of 3.0 V to 4.5 V can be obtained based on the relationship curve of the capacity and the voltage. Charging gram capacity of positive electrode material=charging capacity of coin-type lithium-ion battery/mass of positive electrode material.

### Test of positive electrode material and positive electrode plate

Preparation of positive electrode plate sample: The electrochemical apparatus was discharged to 2.8 V at a current density of 0.1 C, and then disassembled in a glove box, the positive electrode plate was removed, the positive electrode plate was cut into small circular discs, and then soaked into a solvent of dimethyl carbonate (DMC) for 5 minutes, and the positive electrode plate was air-dried for testing.

### (1) X-ray diffraction test

The positive electrode material and positive electrode plate were characterized by an X-ray powder diffractometer (XRD, model: Bruker D8 ADVANCE) with Cu Kα as a target. A voltage and current were 40 kV and 40 mA, and a scanning angle ranged from 10° to 80°. XRD patterns of the positive electrode materials obtained from testing were subjected to phase matching to obtain information on a crystal phase structure and unit cell parameters of the positive electrode material.

### (2) Scanning electron microscope test

Samples of positive electrode materials and positive electrode plates were tested under a scanning electron microscope (SEM). Images of the positive electrode material and its cross section were captured at magnifications of 1000, 3000, 5000, 10000 and 30000 times respectively.

### (3) Time-of-flight secondary ion mass spectrometry test

A time-of-flight secondary ion mass spectrometer (model: PHI nanoTOFII Time-of-Flight SIMS) was used to test content distribution of Li, Ni, Mn, Na, P and another element in positive electrode plates at different etching depths.

### (4) Electron probe micro-analyzer (EPMA) test

The positive electrode plate was cut with a triple ion beam to obtain a flat cross section exposing an internal structure of the positive electrode material. A cross section of any positive electrode material particle was selected, and an electron probe micro-analyzer (EPMA, model: JXA-8230) was used to measure contents of Na, P and another element in a first region within 50 nm from a surface of the particle and a second region at a distance of more than 1000 nm from the surface of the particle in the positive electrode material particle.

### (5) Inductively coupled plasma optical emission spectrometer (ICP-OES) test

The ICP-OES was used to measure contents of Na, Li, Ni, Mn, P and another element in the positive electrode material.

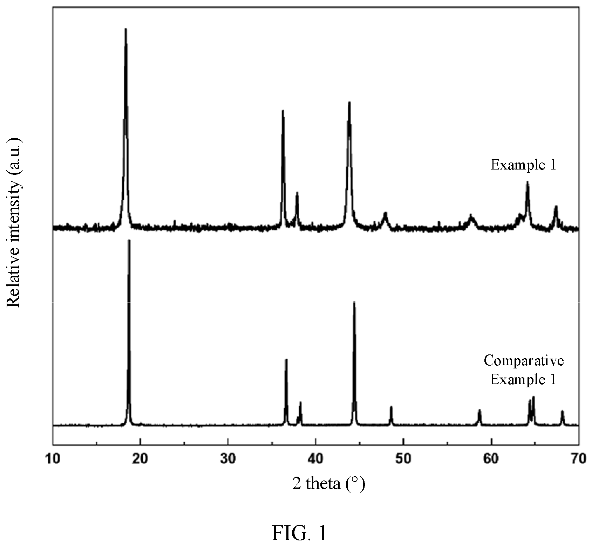

FIG. 1 is an X-ray diffraction pattern of positive electrode materials in Example 1 and Comparative Example 1. It can be learned from FIG. 1 that the X-ray diffraction pattern of the positive electrode material in Example 1 in this application exhibits characteristic diffraction peaks in 2θ ranges of 17° to 20°, 35° to 38°, and 42° to 46°, which correspond to characteristic peaks of crystal planes 003, 101, and 104 of layered lithium nickel manganese composite oxide, where a corresponding space group is R-3m. The larger the full width at half maximum of the characteristic peaks in the X-ray diffraction pattern, the smaller the grain size of the material. The full width at half maximum of the characteristic peaks of the positive electrode material in this application is higher than that of the conventional positive electrode material in Comparative Example 1, indicating that the positive electrode material in this application has finer grains. In addition, it can be learned from Table 2 that unit cell parameters of the positive electrode material in this application are also greater than those of the conventional positive electrode material in Comparative Example 1, which facilitates lithium ion transport and further improves transport kinetic performance of the positive electrode material.

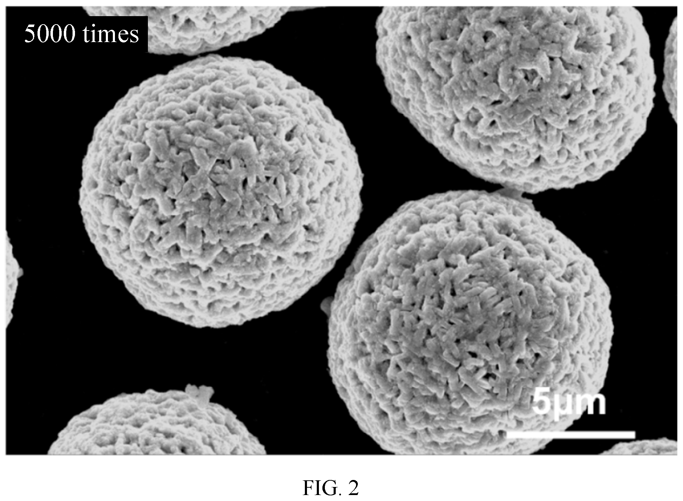

FIG. 2 is a scanning electron microscope (SEM) image of a positive electrode material in Example 1 at a magnification of 5000 times. It can be learned from FIG. 2 that the positive electrode material in Example 1 presents spherical secondary micron particles loosely stacked by slender primary nanocrystalline grains.

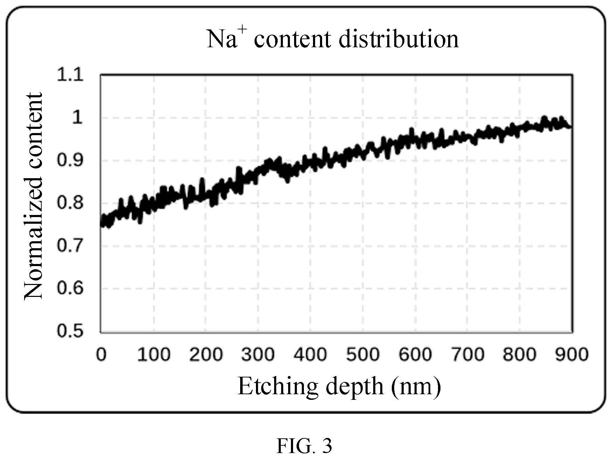

FIG. 3 is a TOF-SIMS image of Na in a positive electrode material in Example 1. It can be learned from FIG. 3 that sodium contents in the positive electrode material in Example 1 gradually rise as etching depths increase. A concentration gradient of Na is formed by the sodium contents from a surface of the positive electrode toward an interior of the positive electrode material, which induces generation of oxygen defects. This reduces interfacial reaction activity of highly reactive surface metal ions, oxygen ions and the electrolyte, and improves the structural stability, interfacial stability and lithium ion diffusion capability of the positive electrode material, thereby enhancing the cycling performance and high-temperature storage performance of the lithium-ion battery.

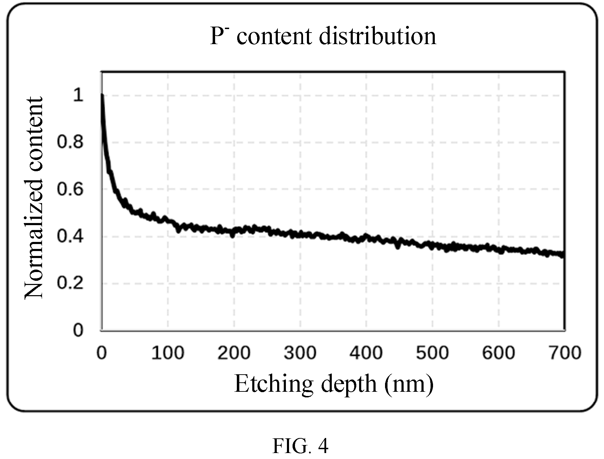

FIG. 4 is a TOF-SIMS image of P in a positive electrode material in Example 1. It can be learned from FIG. 4 that P contents in the positive electrode material in Example 1 gradually decrease as etching depths increase. A concentration gradient of P is formed by the P contents from a surface of the positive electrode toward an interior of the positive electrode material, which further induces occurrence of gradient distribution of Na and oxygen defects. This reduces interfacial reaction activity of highly reactive surface metal ions, oxygen ions and the electrolyte, and improves the structural stability, interfacial stability and lithium-ion diffusion capability of the positive electrode material, thereby enhancing the cycling performance and high-temperature storage performance of the lithium-ion battery.

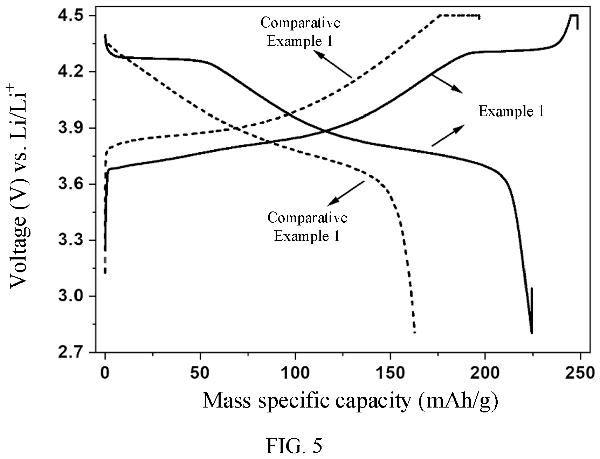

FIG. 5 shows charge-discharge curves of coin-type lithium-ion batteries in Example 1 and Comparative Example 1. It can be learned from FIG. 5 that a charging curve of the coin-type lithium-ion battery in Comparative Example 1 shows no obvious plateau in a range of 4.2 V to 4.5 V, while a charging curve of the coin-type lithium-ion battery in Example 1 exhibits a plateau in the range of 4.2 V to 4.5 V. In addition, with reference to Table 2, the coin-type lithium-ion battery constructed with the positive electrode material in this application also satisfies a condition: 0.17≤Q1/Qt≤0.33. This demonstrates that the positive electrode material in this application delivers a high reversible charge-discharge capacity in the range of high voltages, and therefore, the lithium-ion battery can have higher energy density.

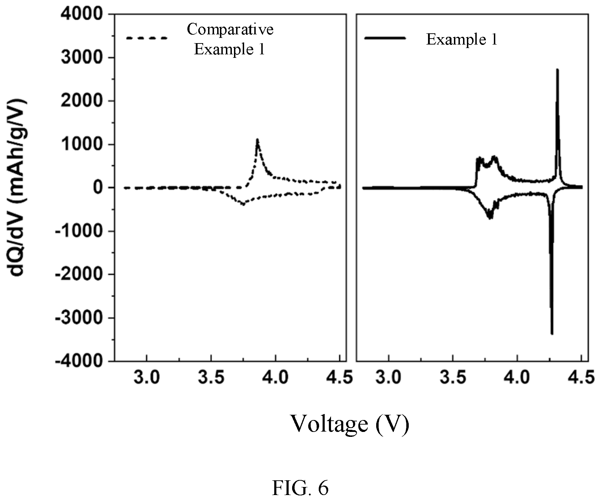

FIG. 6 shows differential capacity-voltage curves of coin-type lithium-ion batteries in Example 1 and Comparative Example 1. It can be learned from FIG. 6 that the differential capacity-voltage (dQ/dV) curve of the coin-type lithium-ion battery in Comparative Example 1 exhibits no oxidation peak or reduction peak in a range of 4.2 V to 4.5 V, while the differential capacity-voltage (dQ/dV) curve of the coin-type lithium-ion battery in Example 1 exhibits a first oxidation peak and a first reduction peak in the range of 4.2 V to 4.5 V, and a second oxidation peak and a second reduction peak in a range of 3.6 V to 4.0 V. It can be learned from Table 2 that for the coin-type lithium-ion battery constructed with the positive electrode material in this application, Vo1 ranges from 4.2 V to 4.4 V, and also satisfies a condition: |Vo1-Vr1|≤0.13 V. The smaller the voltage difference |Vo1-Vr1| between the first oxidation peak and the first reduction peak, the better the electrochemical reversibility and the lower the electrochemical polarization of the positive electrode material. A value of |Vo1-Vr1| for the positive electrode material in this application is less than or equal to 0.13 V, which indicates favorable reversibility of the positive electrode material in the high-voltage range, thereby further improving the cycling performance of the lithium-ion battery under the high voltage.

Test data of Examples 1 to 18 and Comparative Examples 1 to 3 are recorded in Tables 1 to 6.

**Table 1**

| Group | Positive electrode material | | | | | | | | | |
|---|---|---|---|---|---|---|---|---|---|---|
| | Ni (%) | Mn (%) | Li (%) | Na (%) | c_{1Na} (%) | C2Na (%) | c_{1Na}/c_{2Na} | P (%) | c_{1P} (%) | c_{1P}/c_{1Na} |
| Example 1 | 50 | 50 | 94.0 | 5.96 | 4.78 | 6.46 | 0.74 | 3.00 | 3.85 | 0.81 |
| Example 2 | 50 | 50 | 90.4 | 9.58 | 9.99 | 10.09 | 0.99 | 0.05 | 0.06 | 0.006 |
| Example 3 | 50 | 50 | 91.2 | 8.85 | 8.74 | 9.40 | 0.93 | 0.10 | 0.18 | 0.02 |
| Example 4 | 50 | 50 | 91.6 | 8.36 | 7.96 | 8.94 | 0.89 | 0.30 | 0.48 | 0.06 |
| Example 5 | 50 | 50 | 93.0 | 7.03 | 6.28 | 7.75 | 0.81 | 1.00 | 1.63 | 0.26 |
| Example 6 | 50 | 50 | 94.8 | 5.25 | 1.47 | 5.92 | 0.31 | 5.00 | 7.40 | 5.02 |
| Example 7 | 50 | 50 | 95.5 | 4.46 | 1.01 | 5.61 | 0.18 | 10.00 | 10.00 | 9.90 |
| Example 8 | 50 | 50 | 94.1 | 5.93 | 4.71 | 6.45 | 0.73 | 3.00 | 3.85 | 0.82 |
| Example 9 | 50 | 50 | 94.1 | 5.91 | 4.63 | 6.43 | 0.72 | 3.00 | 3.84 | 0.83 |
| Example 10 | 50 | 50 | 94.1 | 5.87 | 4.46 | 6.37 | 0.70 | 3.00 | 3.83 | 0.86 |
| Example 11 | 50 | 50 | 94.2 | 5.83 | 4.15 | 6.29 | 0.66 | 3.00 | 3.81 | 0.92 |
| Example 12 | 50 | 50 | 94.2 | 5.80 | 3.93 | 6.24 | 0.63 | 3.00 | 3.80 | 0.97 |
| Example 13 | 50 | 50 | 94.2 | 5.79 | 3.78 | 6.20 | 0.61 | 3.00 | 3.78 | 1.00 |
| Example 14 | 50 | 50 | 94.2 | 5.77 | 3.46 | 6.07 | 0.57 | 3.00 | 3.74 | 1.08 |
| Example 15 | 50 | 50 | 94.3 | 5.74 | 3.21 | 5.94 | 0.54 | 3.00 | 3.72 | 1.16 |
| Example 16 | 50 | 50 | 94.2 | 5.79 | 3.92 | 6.22 | 0.63 | 3.00 | 3.80 | 0.97 |
| Example 17 | 50 | 50 | 94.2 | 5.80 | 3.93 | 6.24 | 0.63 | 3.00 | 3.80 | 0.97 |
| Example 18 | 50 | 50 | 94.2 | 5.81 | 3.91 | 6.31 | 0.62 | 3.00 | 3.80 | 0.97 |

**Table 2**

| Group | Positive electrode material | | | | | | | | | |
|---|---|---|---|---|---|---|---|---|---|---|
| | Ni (%) | Mn (%) | Li (%) | Na (%) | c_{1Na} (%) | c_{2Na} (%) | c_{1Na}/c_{2Na} | P (%) | c_{1P} (%) | c_{1P}/c_{1Na} |
| Comparative Example 1 | 50 | 50 | 100.0 | / | / | / | / | / | / | / |
| Comparative Example 2 | 50 | 50 | 89.7 | 10.29 | 10.86 | 10.25 | 1.06 | / | / | / |
| Comparative Example 3 | 50 | 50 | 95.8 | 4.17 | 0.41 | 5.13 | 0.08 | 12.00 | 13.69 | 33.39 |

| | | | | | | | | | | |
|---|---|---|---|---|---|---|---|---|---|---|
| Note: "/" in Table 2 indicates that a corresponding preparation parameter or substance does not exist. | | | | | | | | | | |

**Table 3**

| Group | Positive electrode material | | | | | | |
|---|---|---|---|---|---|---|---|
| | a (Å) | c (Å) | Vo1 (V) | Q1/Qt | \|Vo1-Vr1\| (V) | Peak intensity of first oxidation peak (mAh/g/V) | Peak intensity of first reduction peak (mAh/g/V) |
| Example 1 | 2.8879 | 14.4837 | 4.311 | 0.302 | 0.041 | 2795 | 3423 |
| Example 2 | 2.9097 | 14.5984 | 4.321 | 0.283 | 0.058 | 2094 | 2835 |
| Example 3 | 2.8998 | 14.5442 | 4.319 | 0.289 | 0.053 | 2247 | 3028 |
| Example 4 | 2.8956 | 14.5204 | 4.316 | 0.291 | 0.049 | 2349 | 3121 |
| Example 5 | 2.8903 | 14.5045 | 4.313 | 0.296 | 0.045 | 2563 | 3258 |
| Example 6 | 2.8819 | 14.4771 | 4.305 | 0.306 | 0.039 | 2936 | 3591 |
| Example 7 | 2.8798 | 14.4658 | 4.317 | 0.289 | 0.048 | 2295 | 3089 |
| Example 8 | 2.8867 | 14.4802 | 4.310 | 0.303 | 0.040 | 2812 | 3465 |
| Example 9 | 2.8862 | 14.4789 | 4.309 | 0.303 | 0.040 | 2845 | 3497 |
| Example 10 | 2.8857 | 14.4763 | 4.308 | 0.304 | 0.039 | 2887 | 3526 |
| Example 11 | 2.8853 | 14.4752 | 4.307 | 0.305 | 0.038 | 2901 | 3583 |
| Example 12 | 2.8848 | 14.4737 | 4.304 | 0.308 | 0.037 | 3015 | 3687 |
| Example 13 | 2.8841 | 14.4714 | 4.303 | 0.309 | 0.037 | 3087 | 3708 |
| Example 14 | 2.8919 | 14.4971 | 4.307 | 0.304 | 0.039 | 2895 | 3562 |
| Example 15 | 2.8912 | 14.4958 | 4.308 | 0.303 | 0.040 | 2824 | 3473 |
| Example 16 | 2.8844 | 14.4731 | 4.304 | 0.308 | 0.037 | 3023 | 3696 |
| Example 17 | 2.8849 | 14.4742 | 4.303 | 0.309 | 0.037 | 3031 | 3710 |
| Example 18 | 2.8854 | 14.4745 | 4.303 | 0.309 | 0.037 | 3042 | 3757 |

**Table 4**

| Group | Positive electrode material | | | | | | |
|---|---|---|---|---|---|---|---|
| | a (Å) | c (Å) | Vo1 (V) | Q1/Qt | \|Vo1-Vr1\| (V) | Peak intensity of first oxidation peak (mAh/g/V) | Peak intensity of first reduction peak (mAh/g/V) |
| Comparative Example 1 | 2.8759 | 14.1928 | / | 0.147 | / | / | / |
| Comparative Example 2 | 2.9017 | 14.5926 | 4.325 | 0.258 | 0.065 | 1896 | 2574 |
| Comparative Example 3 | 2.9017 | 14.5926 | 4.322 | 0.274 | 0.061 | 2028 | 2769 |

| | | | | | | | |
|---|---|---|---|---|---|---|---|
| Note: "/" in Table 4 indicates that a corresponding preparation parameter or substance does not exist. | | | | | | | |

**Table 5**

| Group | Electrolyte | Performance test | | |
|---|---|---|---|---|
| | A (%) | Gram capacity (mAh/g) | Thickness expansion rate after storage at 85°C (%) | Capacity retention rate under cycling at 45°C (%) |
| Example 1 | / | 248.5 | 11.7 | 91.2 |
| Example 2 | / | 239.1 | 26.4 | 80.1 |
| Example 3 | / | 241.7 | 19.9 | 82.2 |
| Example 4 | / | 245.6 | 15.5 | 84.5 |
| Example 5 | / | 246.9 | 13.4 | 89.7 |
| Example 6 | / | 250.3 | 10.1 | 92.4 |
| Example 7 | / | 244.8 | 16.8 | 83.7 |
| Example 8 | 0.03 | 248.7 | 11.4 | 91.5 |
| Example 9 | 0.05 | 248.9 | 11.2 | 91.9 |
| Example 10 | 0.1 | 249.3 | 10.8 | 92.0 |
| Example 11 | 0.5 | 249.8 | 10.5 | 92.2 |
| Example 12 | 1 | 251.4 | 9.6 | 93.5 |
| Example 13 | 2 | 251.9 | 8.8 | 94.1 |
| Example 14 | 5 | 249.5 | 10.6 | 92.1 |
| Example 15 | 8 | 248.8 | 11.3 | 91.7 |
| Example 16 | 1 | 251.5 | 9.5 | 93.6 |
| Example 17 | 1 | 251.6 | 9.4 | 93.7 |
| Example 18 | 1 | 251.7 | 9.3 | 93.8 |

| | | | | |
|---|---|---|---|---|
| Note: "/" in Table 5 indicates that a corresponding preparation parameter or substance does not exist. | | | | |

**Table 6**

| Group | Electrolyte | Performance test | | |
|---|---|---|---|---|
| | A (%) | Gram capacity (mAh/g) | Thickness expansion rate after storage at 85°C (%) | Capacity retention rate under cycling at 45°C (%) |
| Comparative Example 1 | / | 197.4 | 51.2 | 62.2 |
| Comparative Example 2 | / | 235.4 | 36.6 | 69.7 |
| Comparative Example 3 | / | 238.7 | 28.6 | 73.6 |

| | | | | |
|---|---|---|---|---|
| Note: "/" in Table 6 indicates that a corresponding preparation parameter or substance does not exist. | | | | |

It can be learned from Tables 1 to 6 that, compared with Comparative Example 2 and Comparative Example 3, when the positive electrode materials in Examples 1 to 18 satisfy conditions: c_{1Na}<c_{2Na} and 0.005≤c_{1P}/c_{1Na}≤10, due to the design of the concentration gradient distribution of Na, the "pillar" is built in the lithium layer and oxygen defects are induced, so that the lithium nickel manganese composite oxide has a significantly increased reversible charge-discharge capacity in a high-voltage range (for example, 4.2 V to 4.5 V), thereby ensuring that the lithium nickel manganese composite oxide has higher structural stability and kinetic performance under the high voltage while greatly improving the charge-discharge capacity of the positive electrode material. In addition, the presence of the oxygen defects on the surface improves the surface stability of the lithium nickel manganese composite oxide, inhibits oxygen release and structural phase transition on the surface of the positive electrode material, thereby improving the cycling performance and gas generation of the electrochemical apparatus under a condition of high temperature and a high voltage. Further, compared with the conventional positive electrode material (Comparative Example 1), the positive electrode material in this application can significantly reduce the thickness expansion rate of the lithium-ion battery after storage at high temperature and improve the cycling capacity retention rate of the lithium-ion battery at high temperature, thereby improving safety and cycling performance of the lithium-ion battery.

It can be learned from Table 3 and Table 4 that, the coin-type lithium-ion battery constructed with conventional positive electrode material (Comparative Example 1) exhibits no oxidation peak or reduction peak in a range of 4.2 V to 4.5 V, while the coin-type lithium-ion battery constructed with the positive electrode material in this application (Examples 1 to 18) exhibits a first oxidation peak and a first reduction peak in the range of 4.2 V to 4.5 V, and also exhibits a second oxidation peak and a second reduction peak in the range of 3.6 V to 4.0 V, and Vo1 is 4.2 V to 4.4 V, and satisfies a condition: |Vo1-Vr1|≤0.058 V. The smaller the voltage difference |Vo1-Vr1| between the first oxidation peak and the first reduction peak, the better the electrochemical reversibility and the lower the electrochemical polarization of the positive electrode material. A value of |Vo1-Vr1| for the positive electrode material in this application is less than or equal to 0.058 V, which indicates favorable reversibility of the positive electrode material in this application in the high-voltage range, thereby further improving the cycling performance of the lithium-ion battery under the high voltage. In addition, the full width at half maximum of the characteristic peaks of the positive electrode material in this application is higher than that of the conventional positive electrode material in Comparative Example 1, indicating that the positive electrode material in this application has finer grains. In addition, unit cell parameters of the positive electrode material in this application are also greater than those of the conventional positive electrode material in Comparative Example 1, which facilitates lithium ion transport and further improves transport kinetic performance of the positive electrode material.

It can be learned from Table 5 and Table 6 that, compared with Example 1, in Examples 8 to 18, different types and amounts of B-containing compounds are added in the preparation of the electrolyte. Because the boron-containing compound in the electrolyte is decomposed after charge and discharge, and interacts with Na in the surface layer of the positive electrode material, removal of Na from the surface of the positive electrode material is further induced, and more Na vacancies are constructed in the surface layer of the positive electrode material, thereby facilitating storage of more lithium ions and improving the gram capacity of the positive electrode material. In addition, B and P can further combine with oxygen on the surface of the lithium nickel manganese composite oxide, to work together with the oxygen defects on the surface to further inhibit the oxygen release on the surface of the positive electrode material, which reduces direct contact between the electrolyte and the surface of the positive electrode material, thereby inhibiting the decomposition of the electrolyte and the occurrence of the side reaction, greatly improving the surface stability of the positive electrode material, and further significantly improving the cycling performance and gas generation of the electrochemical apparatus under a condition of high temperature and a high voltage.

The foregoing embodiments are merely intended to describe the technical solutions of this application, but not intended to constitute any limitation. Although this application is described in detail with reference to the foregoing embodiments, a person of ordinary skill in the art should understand that modifications or equivalent replacements can be made to the technical solutions of this application, without departing from the spirit and scope of the technical solutions of this application.

## Claims

1. A positive electrode material, wherein the positive electrode material comprises a lithium nickel manganese composite oxide, the positive electrode material comprises a first region within 50 nm from a surface of the positive electrode material and a second region at a distance of more than 1000 nm from the surface of the positive electrode material, and the positive electrode material comprises Na and P; based on a total molar amount of Ni and Mn in the first region, a molar percentage of Na in the first region is c_{1Na}, and a molar percentage of P in the first region is c_{1P}; and based on a total molar amount of Ni and Mn in the second region, a molar percentage of Na in the second region is c_{2Na}, wherein c_{1Na}<c_{2Na}, and 0.005≤c_{1P}/c_{1Na}≤10.

2. The positive electrode material according to claim 1, wherein 0.18≤c_{1Na}/c_{2Na}≤0.99.

3. The positive electrode material according to claim 1, wherein 0.3≤c_{1Na}/c_{2Na}≤0.9.

4. The positive electrode material according to claim 1, wherein 0.05≤c_{1P}/c_{1Na}≤5.

5. The positive electrode material according to any one of claims 1 to 4, wherein the positive electrode material satisfies at least one of the following characteristics:
(1) $1 % \leq {c}_{1 Na} \leq 10 % ;$
(2) $5.6 % \leq {c}_{2 Na} \leq 10 % ;$ or
(3) $0.05 % \leq {c}_{1 P} \leq 10 % .$

6. The positive electrode material according to claim 1, wherein based on a total molar amount of Ni and Mn in the positive electrode material, a molar percentage of P in the positive electrode material is 0.05% to 10%.

7. The positive electrode material according to claim 1, wherein based on a total molar amount of Ni and Mn in the positive electrode material, a molar percentage of Na in the positive electrode material is 4.5% to 9.6%.

8. An electrochemical apparatus, comprising an electrolyte and a positive electrode plate, wherein the positive electrode plate comprises the positive electrode material according to any one of claims 1 to 7.

9. The electrochemical apparatus according to claim 8, wherein the electrolyte comprises a boron-containing compound, and the boron-containing compound comprises at least one of lithium bis(oxalato)borate, lithium difluoro(oxalato)borate, lithium tetrafluoroborate, tris(hexafluoroisopropyl) borate, trimethyl borate, tris(trimethylsilyl) borate, boric acid, tris(2,2,2-trifluoroethyl) borate, 3-thienylboronic acid or pyridine-boron trifluoride; and
based on a total mass of the electrolyte, a mass percentage of the boron-containing compound is A%, wherein 0.05≤A≤5.

10. The electrochemical apparatus according to claim 9, wherein 0.5≤A≤2.

11. The electrochemical apparatus according to any one of claims 8 to 10, wherein when the electrochemical apparatus is charged and discharged at a current of 0.1 C in a voltage range of 2.8 V to 4.5 V, an obtained differential capacity-voltage curve exhibits a first oxidation peak and a first reduction peak in a range of 4.2 V to 4.5 V.

12. The electrochemical apparatus according to claim 11, wherein the electrochemical apparatus satisfies at least one of the following characteristics:
(1) based on a mass of the positive electrode material, peak intensity of the first oxidation peak is 2090 mAh/g/V to 3090 mAh/g/V, and peak intensity of the first reduction peak is 2830 mAh/g/V to 3710 mAh/g/V;
(2) a peak voltage of the first oxidation peak is Vo1, and a peak voltage of the first reduction peak is Vr1, wherein |Vo1-Vr1|≤0.058 V;
(3) when the electrochemical apparatus is charged and discharged at a current of 0.1 C in a voltage range of 2.8 V to 4.5 V, a charging curve in the obtained capacity-voltage curve exhibits a plateau in a range of 4.2 V to 4.5 V, a capacity of the charging curve in the range of 4.2 V to 4.5 V is Q1, and a capacity of the charging curve in the range of 3.0 V to 4.5 V is Qt, wherein 0.28≤Q1/Qt≤0.31;
(4) the obtained differential capacity-voltage curve exhibits a second oxidation peak and a second reduction peak in a range of 3.6 V to 4.0 V;
(5) an X-ray diffraction pattern of the positive electrode material exhibits characteristic diffraction peaks at 2θ ranges of 17° to 20°, 35° to 38° and 42° to 46°; or
(6) the positive electrode material has a layered crystal structure belonging to R-3m space group.

13. An electronic apparatus, comprising the electrochemical apparatus according to any one of claims 8 to 12.
